# EUROPEAN PATENT APPLICATION

(11) **EP 4 190 629 A1**
(43) Date of publication of application: **07.06.2023**
(21) Application number: 21212643.7
(22) Date of filing: 06.12.2021
(51) Int. Cl.: B60N 2/28

(54) **SEAT COMPRISING MEANS FOR SPACING APART HARNESS STRAPS**

(71) Applicant: Dorel France, 49309 Cholet Cedex (FR)
(72) Inventor: OLFERS, Dennis, 5595 AV Leende (NL); TOONDERS, Sander Gerardus, 5554 ET Valkenswaard (NL)
(74) Representative: Vidon Brevets & Stratégie

(57) **Abstract**

The invention relates to a seat (1), comprising a seat portion (11), a backrest (12), a headrest (13) having a base section and two side portions extending from said base section, and a harness (14) having two shoulder straps, said shoulder straps being able to adopt two positions:
- a position of use, in which said shoulder straps are pressed against the sitter's body; and
- a position of rest, in which said shoulder straps are moved away from the sitter's body, to allow the sitter to sit in and out of said seat.
In said position of rest, at least a portion of the shoulder straps is pressed against a surface of one of said side portions (132) of said headrest (13).

## Description

### Technical Field

The field of the invention is related to a seat. More specifically, the invention relates to seats designed with a harness system to restrain the sitter and thus protect the sitter. In particular, the invention relates to seats fitted with a safety harness which is integrated with the seat.

The invention relates in particular to the use of such a harness, and in particular the ergonomics of using such a harness.

### Prior art

Seats are known in which the sitter is restrained by a harness; and safety seat intended to be installed in a motor vehicle is one classic example of such. The harness system is independent of the safety belt of the transport device, and generally referred to as a "5-point harness", comprising two shoulder straps which extend along the backrest and are attached to the seat at the top and at the bottom part thereof. These straps form shoulder straps, which are placed over the shoulders of the sitter when he is installed in the seat. The harness also has a crotch strap, which is integral with the seat base, the free end of which has suitable locking means, a connecting buckle for example, for connecting two hooks which are mounted respectively on each of the shoulder straps. When the sitter is placed in the seat, the shoulder straps are connected to the crotch strap via the connecting buckle so as to hold the sitter in the seat.

The shoulder straps generally have sheaths provided over them. These sheaths consist for example of sleeves which are fitted around the shoulder straps of the safety harness on a portion thereof, in particular at the level of the torso and shoulders of the sitter. The sleeves are generally made of a foam material covered by fabric, and one part that is intended to come into contact with the sitter is made of a material with a high coefficient of friction that adheres to the sitter's clothing, which enables better restraint of the sitter, particularly during an accident, and may improve comfort. The shoulder straps may be able to move inside the sleeves.

A known disadvantage of such known seats is the fact it is often difficult to install the sitter in the seat, in particular to fit the harness. Indeed, the shoulder straps, which are not used when the seat is empty, generally lie along the backrest and on the seat portion. As a result, when the sitter is placed in the seat, the latter sits on the shoulder straps. This is not only uncomfortable for the sitter but it is also a problem for the accompanying adult who has to feel for the shoulder straps behind the sitter by fumbling, while trying to lift the sitter in order to free the shoulder straps.

Several techniques have been proposed to address this problem which consist in particular of providing means for removing the straps from the area where the sitter is placed, by hooking them along the side walls of the seat (outside these walls or on the free edge of these walls). This may consist in particular of hooks installed on the side edges of the backrest of the seat, which can receive the shoulder strap or the sleeve, as described in patent document EP0823349. According to this document, the hooks can be replaced by magnets. In a similar approach, pairs of magnetic elements can be provided, which are inserted respectively in the sleeves and in the side walls of the backrest of the seat, as described in European patent documents EP2163424 or EP2475547 (HTS).

These approaches are of interest, but involve the user performing actions to space apart the straps and then fix them outside the installation area of the sitter in the seat. These sorts of actions are specific, and sometimes not very intuitive or easy, particularly when you have to look after the sitter at the same time. Furthermore, they can sometimes be neglected when the sitter is removed with the straps remaining on the back of the backrest.

Furthermore, these approaches may not be suitable for seats fitted with height-adjustable harnesses, for example attached to a height-adjustable headrest. In this case, the position of the hooks or the magnets may not be suitable in ergonomic terms, particularly in extreme adjustment positions. Indeed, the position of the hook or the magnet is a middle position which is not always suitable.

To overcome some of these disadvantages, a second technique, described in particular in patent document EP1623891 has been proposed, consisting of using springs within the sleeves or in association with the harness straps, one end of the springs being joined to the backrest, and the springs being prestressed in order to straighten the straps substantially perpendicular to the backrest when they are not locked, so as to facilitate the installation of the sitter.

A disadvantage of this second technique is that it is not suitable for every situation, and particularly when the tension of the straps is adjusted by a retractor. Indeed, when a retractor is activated to tension the harness straps, the springs of the second technique may oppose or at least disrupt the retraction of the straps.

In addition, it may be awkward not only to fit the springs and relatively expensive; the springs may also be considered as aggressive for really young sitter, especially when the spring load is high in order to lift the shoulder straps and buckle.

Therefore, there is still a need for a solution which makes it possible to facilitate fitting the sitter into the seat which is suitable for every situation and which is simple to implement and use.

### Summary of the invention

The present technique makes it possible to address at least some of the disadvantages of the prior art. The present technique relates to a seat, comprising a seat portion, a backrest, a headrest having a base section and two side portions extending from said base section, and a harness having two shoulder straps. Each of shoulder straps can adopt two positions:
- a position of use, in which said shoulder straps are pressed against the sitter's body; and
- a position of rest, in which said shoulder straps are moved away from the sitter's body to enable the latter to be taken out and put in.

According to the invention, in said position of rest, at least a portion of each shoulder strap is pressed against the surface of one of said side portions of said headrest.

In this way, when the harness is not locked, the shoulder straps of the harness are spaced apart/raised to free up the placing of the sitter in the seat and therefore facilitate the installation and removal of the sitter. This operation is automatic, i.e. it is performed without any particular action by the user, as soon as the harness is unlocked.

There is no need to manually move the straps to space them apart and to secure them to the side walls extending from the backrest.

According to one particular aspect, each of said shoulder straps runs through a sleeve; and in the position of rest, at least a portion of each sleeves is pressed against the surface of one of said side portions of said headrest.

According to one particular aspect, in the position of rest, at least a portion of each sleeves is pressed against the lower surface of one of said side portions of said headrest.

Placing the sleeves against the lower surface of the headrest makes is easier to use the harness when installing and removing the sitter in the seat. Indeed, this position of the sleeves when the straps are disconnected is more intuitive for the user. The latter no longer has to search for the fastening elements installed on the sides or rear of the backrest.

According to one particular aspect, the seat comprises spacing means which make it possible to keep said sleeves in said position of rest.

Thus, when the harness straps are disconnected, the spacing means allow the sleeves, and therefore the harness straps to be moved away from the space where the sitter sits.

In this way, the implementation is intuitive, and in some embodiments automatic. The user does not need to look for the hooks or magnets on the edges of the backrest: it is simply necessary to raise the sleeves to release the sitter, and these then come to rest against the headrest.

The proposed technique therefore makes it possible to facilitate the use of a safety harness as well as the installation of the sitter in the seat. The removal of the sitter from the seat is also made easier as the sleeves, and therefore the harness straps, move away substantially automatically when the straps are disconnected.

According to a particular embodiment of the invention, said spacing means comprise complementary magnetic elements, which tend to connect with one another, at least a first magnetic element being placed in said sleeve and cooperating with at least one second complementary magnetic element located in said corresponding surface of the side portion of the headrest.

The use of magnets in the sleeves and in the headrest is simple and makes the safety harness easy to use. These magnetic elements can perform the double function of automatically returning the sleeves along the headrest, then holding them in contact with the latter.

Of course, one of the magnets may be a metallic element suitable for cooperating with a magnet.

According to an alternative embodiment of the invention, said spacing means comprise Velcro (registered trademark) or complementary press studs.

According to a particular aspect of the invention, said sleeves may bear a flexible plate extending at least partly along said sleeves.

Such a flexible plate may be moulded in particular so as to introduce a degree of stiffness/rigidity to the sleeves, such that the transition from the position of rest to one of the positions of use is facilitated. Thus, when the straps are disconnected, the flexible plate makes it possible to straighten and automatically move apart the straps which are then held in position outside of the sitter's space in the seat by the magnetic elements.

Such a solution does not require any particular manipulation by the user, thus making it intuitive and simple to use, along with the use of magnets.

According to another embodiment, said spacing means comprise a bistable plate extending at least partly along said sleeves, which can adopt two positions, corresponding respectively to the position of use and the position of rest of the sleeves.

This bistable effect of the plate allows the sleeves to transition "automatically" between the position of rest and the position of use, and vice versa. The use of a bistable plate inside the sleeves is simple and it is intuitive to use for the user.

According to another embodiment, said spacing means comprise a moulded plate made of plastic material which extends at least partly along said sleeves, said plate being articulated about a spring-loaded pin which is configured to exert a restoring force on said sleeves, tending to return said sleeves against said headrest.

According to one aspect of this embodiment, said spring-loaded pin comprises a locking mechanism of said pin in at least the position of rest of said sleeves.

Thus the sleeves are automatically returned to the position of rest, in order to facilitate the use of the safety harness.

According to another particular aspect of the invention, said headrest is height-adjustable.

In particular, said shoulder straps can be moved in height simultaneously with said headrest.

The invention is indeed fully adapted/compatible with the use of an adjustable headrest. In this way, the use of the harness is simplified, regardless of the size of the sitter, and therefore the position of the harness. Indeed, the adjustment of the upper part of the harness, and therefore the sleeves, is linked to the adjustment of the headrest. The relative position of the sleeves is therefore invariable relative to the headrest. When the headrest is adjusted to desired height in accordance with size of the sitter, the shoulder straps are automatically lifted up in the desired height accordingly in the position of rest, which is much more convenient for the sitter.

According to further particular aspect of the invention, the seat comprises a retractor configured to tension the harness acting on said shoulder straps.

Thus, the movement of the sleeves in the direction of the side portions of the headrest corresponds substantially to the movement of the harness straps when the retractor is activated. The sleeves according to the invention do not interfere with the retraction of the harness straps by the retractor, but are instead drawn into this position of rest by the action of the retractor on the straps.

The transition of the sleeves from the position of use to the position of rest thus appears to be substantially automatic when the straps are disconnected, i.e. without or at least almost without any manipulation by a user.

### Figures

Other features and advantages of the invention will become clearer from the following description of several preferred embodiments, given merely as illustrative and non-limiting examples, and the accompanying drawings, in which:
[Fig 1] is a side view of an example of a seat in a position facing the road designed to implement the proposed technique;
[Fig 2] is a side view of an example of a seat in a position with its back to the road designed to implement the proposed technique;
[Fig 3] is a top view of a headrest illustrating the general principle of the proposed technique;
[Fig 4] illustrates a first particular embodiment of the spacing means of the shoulder straps of the harness according to the proposed technique;
[Fig 5] illustrates a second particular embodiment of the spacing means of the shoulder straps of the harness according to the proposed technique;
[Fig 6] illustrates a third particular embodiment of the spacing means of the shoulder straps of the harness according to the proposed technique; and
[Fig 7] illustrates a fourth particular embodiment of the spacing means of the shoulder straps of the harness according to the proposed technique.

### Detailed description of the invention

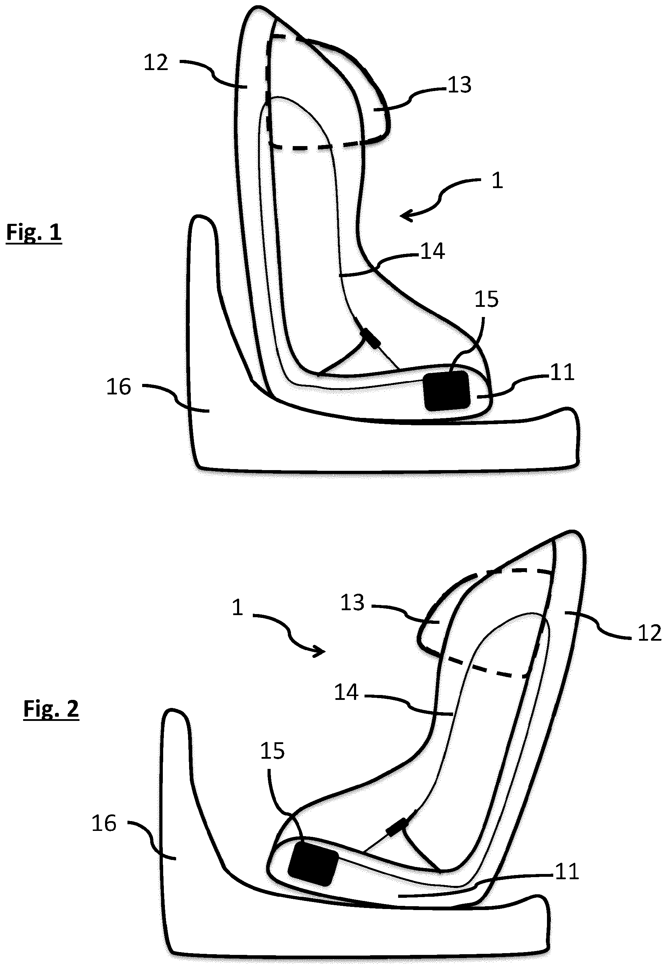

As illustrated in **figures 1 and 2****,** a classic circumstance for the seat of the present invention is to be installed in a motor vehicle. This seat 1 comprises a seat portion 11, a backrest 12 and a headrest 13 which is adjustable in height. A safety harness 14, independent of the safety belt of the motor vehicle, is used to restrain the sitter in the seat. In this example, the tension of the harness 14 is adjusted/controlled by a retractor 15 located in the seat 12. The retractor 15 acts on a rear portion of the harness 14 extending into the backrest 12 and the seat portion 11, to press the harness shoulder straps against the sitter's body in a sufficient and controlled manner. Such a seat 1 can be fixed directly to a motor vehicle seat by means of Isofix^{®} clamps or via a base 16 fixed to the seat of the motor vehicle seat. The seat 1 illustrated in this example can be used facing towards the road (figure 1) or facing away from the road (figure 2).

These seat elements 1 are standard elements and will therefore not be described in more detail here.

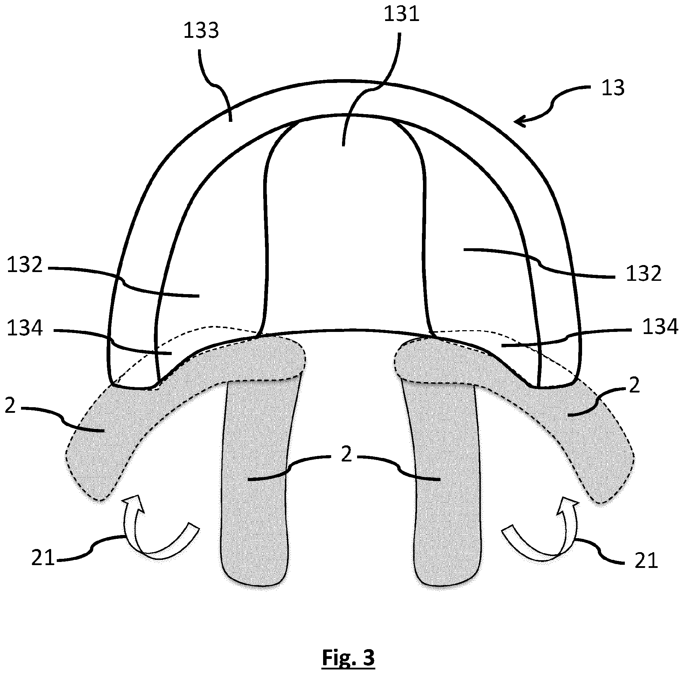

**Figure 3** illustrates in detail the adjustable headrest 13 of the seat 1. More specifically, the headrest 13 has a base section, or central wall 131 and two side portions, or side walls 132 located on either side of the base section 131. The headrest 13 has an upper surface 133 which extends over the top of the base section 131 to the front of the headrest 13 at the level of the side portions 132.

The side portions 132 each have a lower surface 134 which is located substantially facing the seat portion 11. In other words, the lower surface 134 is located opposite and above the sitter's shoulders when the latter is installed in the seat 1. In some embodiments, the spacing of the side portions can be adjustable, in particular by acting on the angle that they form with the base section 131.

This headrest 13 is adjustable in height to fit the size of the sitter. The shoulder straps of the harness are attached to this headrest, for example by means of a plate or a rod joined to the headrest so that the height of the straps, at shoulder level, is adjusted simultaneously with the height adjustment of the headrest.

Figure 3 illustrates the sleeves 2 used on the shoulder straps of the harness 14 (not shown). They can be connected to the backrest 12 or to the headrest 13, for example by a link, so that they can always be placed effectively on the shoulders and/or the torso of the sitter, and perform their function efficiently.

The invention proposes a new approach to the spacing of the shoulder straps and associated sleeves, when the harness is not buckled. Indeed, instead of placing the shoulder straps and/or the associated sleeves along the side wall of the backrest, or holding them in a free space in front of the backrest by means of a spring, the shoulder straps and/or the sleeves 2 are pressed against a surface of the headrest 13, and more precisely against the lower surface of the side walls 132 of the headrest 13.

This has several advantages. Firstly, the connection is simple and effective, regardless of the size of the sitter and therefore the position of the harness. Indeed, the adjustment of the position of the upper part of the harness, and therefore the sleeves, is associated with the adjustment of the headrest. The relative position of the sleeves is therefore invariable with respect to the headrest.

Furthermore, it is intuitive to use, and in some embodiments automatic. The user does not need to look for hooks or magnets on the edges of the backrest: it is simply necessary to lift the sleeves to release the sitter, and the shoulder straps and/or the associated sleeves come to rest against the headrest.

It is important to note here that although this solution appears simple, effective and ergonomic, it is not at all obvious. Indeed, for many years, different, more complex and/or less ergonomic solutions have been developed, without the approach of the invention being envisaged.

The following embodiments have spacing means installed in the sleeves. However, in each case, these can also be mounted, alternatively or additionally, directly on and/or in the strap.

According to different embodiments of the invention, spacing means 3 for sleeves 2 of the harness 14 are used which are configured to move the sleeves 2 in direction to and/or to keep them facing the lower surface of the headrest 13, when the harness 14 is not locked. More precisely, the sleeves 2 can be displaced between:
- at least one position of use (represented by a continuous line) corresponding to a connected state of the harness straps 14, in which the sleeves 2 are pressed against the shoulders of the sitter placed in the seat 1 in order to keep the latter in placed, particularly in the case of an accident; and
- a position of rest (represented by a dashed line) corresponding to a disconnected state of the harness straps 14, in which the sleeves 2 are pressed against the lower surface 134 of the side portions 132 of the headrest 13, in order to facilitate the placement and removal of the sitter from the seat 1.

Thus, when the harness straps 14 are disconnected, the spacing means 3 make it possible to move apart the sleeves 2, and therefore the harness straps 14, away from the sitter's space in the seat 1. The displacement of the sleeves 2 is performed substantially according to the arrows 21 shown in figure 3.

In the position of rest, the sleeves are therefore at least partly pressed against the lower surface 134 of the side portions 132 of the headrest 13. The sleeves are pressed/pulled under the side portions 132 of the headrest 13 so as to facilitate the installation and the removal of the sitter in the seat 1.

The height adjustment of the latter does not interfere with the operation of the spacing means. No additional adjustment or manipulation is necessary from the user to adapt the spacing means to the height adjustment of the headrest 13.

Furthermore, the displacement of the sleeves 2 in the direction of the side portions 132 of the headrest 13 corresponds to the displacement of the harness straps 14 when the retractor 15 is actuated. The sleeves 2 according to the proposed technique therefore do not interfere with the winding of the harness straps 14 by the retractor 15, but are instead driven to this position of rest by the action of the retractor on the straps.

The transition of the sleeves 2 from the position of use to the position of rest appears to be substantially automatic when the straps are disconnected, i.e. without or at least almost without the manipulation of a user.

The proposed technique thus facilitates the use of a safety harness as well as the installation of the sitter in the seat 1. The removal of the sitter from the seat is also facilitated since the sleeves 2, and therefore the harness straps 14, are spaced apart substantially automatically when the straps are disconnected.

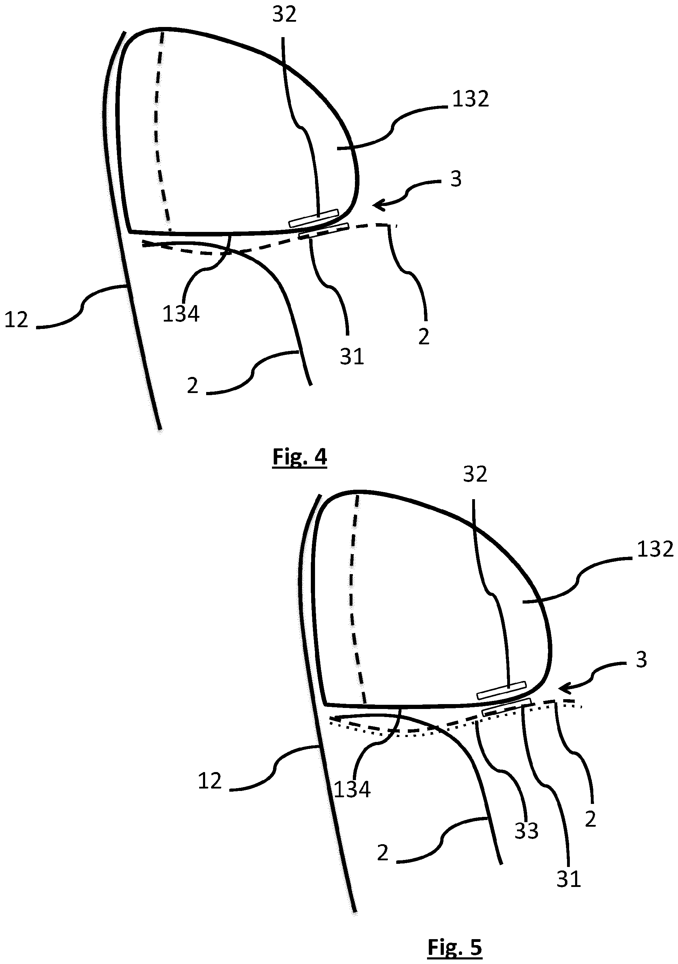

In figures 4 to 7 described below, the sleeves 2 are illustrated in the position of rest (represented as a dashed line) and in the position of use (represented as a continuous line).

A first embodiment of the spacing means 3 is represented in **figure 4****.**

The sleeves 2 comprise spacing means 3 which in this particular embodiment are in the form of a magnet 31 extending at least partly along each of the sleeves 2. More precisely, the magnet 31 extends along the upper surface of the sleeves 2, i.e. the surface opposite to the surface intended to come into contact with the sitter.

Each side portion 132 of the headrest 13 has, on its lower surface 134, a complementary magnet 32 designed to cooperate with one of the magnets 31 of the spacing means. For example, each of the magnets 32 is located at the front end of the lower surface 134 of a side portion 132, i.e. at the end of the side portion 132 opposite the backrest 12.

The use of magnets 31, 32 in the sleeves 2 and in the headrest 13 is simple and allows the easy use of the safety harness 14. Of course, one of the magnets 31, 32 can be a metal element capable of cooperating with a magnet.

A similar approach can be implemented with other reversible fastening means, for example Velcro (registered trademark).

In a second embodiment of the spacing means 3 illustrated in **figure 5****,** the spacing means 3 comprise, in addition to the magnets 31 and 32 described in relation to the first embodiment, a flexible plate 33 (shown by a dotted line), preferably made from plastic material.

The flexible plate 33 is moulded in such a way as to introduce a certain stiffness /rigidity to the sleeves 2, such that the transition from the position of rest to one of the positions of use is facilitated.

Of course, the flexible plate 33 has a flexibility such that the sleeves 2 can be maintained in the position of rest solely by the magnets 31, 32.

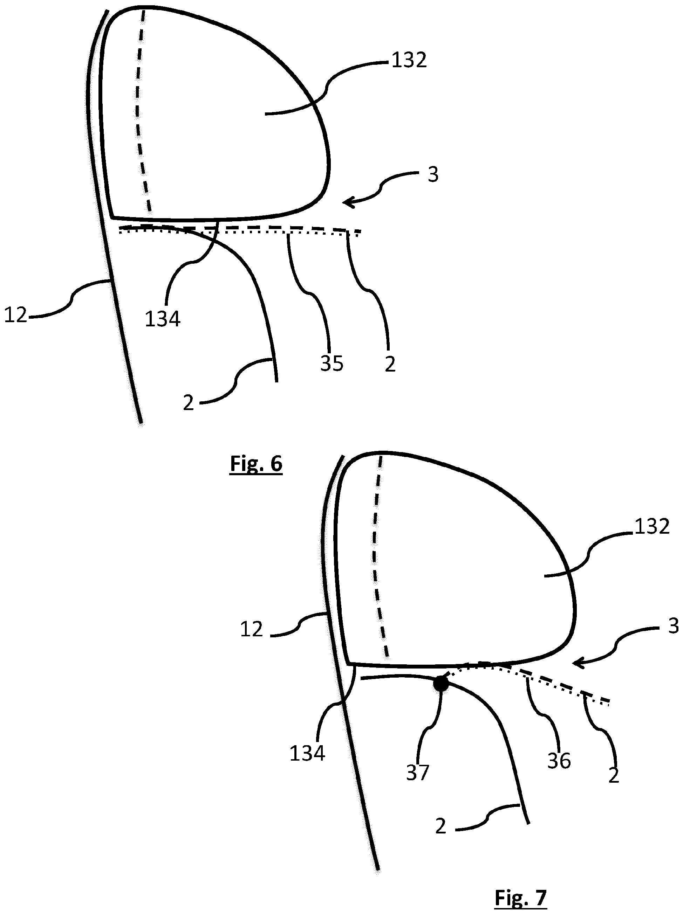

**Figure 6** illustrates a third embodiment of the spacing means 3 in which the sleeves 2 are provided with a bistable plate 35, for example made from metallic material. The bistable plate 35 extends at least partly along the upper surface of the sleeve 2 and allows in an active position, i.e. when the plate is under tension/rigid, the sleeves 2 to be placed in a position of rest in which they are pressed against the lower surface 134 of the side portions 132 of the headrest 13. In a deactivated position of the bistable plate 35, i.e. when the bistable plate 35 is relaxed, the sleeves 2 can be displaced into the position of use without resistance from the bistable plate 35.

This bistable effect of the plate 35 allows the "automatic" transition of the sleeves between the position of rest and the position of use, and vice versa. The use of a bistable plate 35 inside the sleeves 2 is simple and its use is intuitive for the user.

**Figure 7** illustrates a fourth embodiment of the spacing means 3 in which the sleeves 2 are provided with a moulded plate 36, preferably made of plastic material. The moulded plate 36 is relatively rigid (compared to the fabric of a sleeve) but still sufficiently deformable to match the shapes of the sitter's shoulders and torso.

The moulded plate 36 extends at least partly along the upper surface of the sleeve 2 and has, at its rear end close to the backrest 12, a joint 37 in the form of an axis of rotation. The axis of rotation is of the spring-loaded pin type so as to constantly exert a restoring force on the moulded plate 36 in order to return the sleeves 2 from the position of rest to one of the positions of use.

The joint 37 also comprises a locking mechanism for locking the spring-loaded pin when the sleeves 2 are in the position of rest.

Thus, the sleeves 2 are automatically returned from the position of rest to one of the positions of use in order to facilitate the use of the safety harness 14.

The embodiments described in relation to figures 4 to 7 are not limiting. It is understood that other mechanisms can be used to replace the spacing means described above without departing from the general principle of the proposed technique, which consists of returning and/or pressing the sleeves 2, and therefore the straps of the harness 14, below the side portions 132 of the headrest 13.

This technique is particularly suitable when the headrest 13 is height-adjustable and the harness 14 is adjusted by means of a retractor 15.

Indeed, the proposed technique makes it possible to adjust the height of the headrest 13 without needing to adjust the spacing means 3 as a result. Indeed, the headrest 13 and the spacing means are displaced together since the headrest 13 supports the sleeves 2 comprising the actuating means 3.

In addition, the direction of displacement of the sleeves 2 towards the headrest 13 when they move into a position of rest coincides with the direction of displacement of the straps when the retractor 15 is activated. This aspect therefore allows a substantially automatic spacing of the sleeves 2.

The above description makes it possible to use the proposed technique in a seat to be fixed into a motor vehicle (or another type of vehicle, in particular a coach, aeroplane...). However, the general principle of the proposed technique could be envisaged in a pushchair seat, a high chair, a bouncer or any other seat requiring the sitter to be held by a harness.

## Claims

1. Seat (1), comprising a seat portion (11), a backrest (12), a headrest (13) having a base section and two side portions extending from said base section, and a harness (14) having two shoulder straps, said shoulder straps being able to adopt two positions:
- a position of use, in which said shoulder straps are pressed against the sitter's body; and
- a position of rest, in which said shoulder straps are moved away from the sitter's body,
in order to facilitate the placement and removal of the sitter from the seat (1), **characterised in that**, in said position of rest, at least a portion of each of shoulder straps is pressed against a surface of one of said side portions (132) of said headrest (13).

2. Seat (1) according to claim 1, **characterised in that** each of said shoulder straps runs through a sleeve (2), and **in that** in the position of rest, at least a portion of each sleeves (2) is pressed against a surface of one of said side portions (132) of said headrest (13).

3. Seat (1) according to claim 2, **characterised in that** in the position of rest, at least a portion of each sleeves (2) is pressed against the lower surface (134) of one of said side portions (132) of said headrest (13).

4. Seat (1) according to claim 2 or 3, **characterised in that** the two side portions (132) of the headrest (13) are configured to project over the front surface of the seat portion (11); and **in that**, in the position of rest, at least a portion of each sleeves (2) is pressed against the lower surface (134) of the front end of one of said portions (132) of said headrest (13) so that each sleeves and the should straps are dragged away from the front surface of the seat portion (11).

5. Seat (1) according to any of claims 1 to 4, **characterised in that** it comprises spacing means (3) for maintaining said shoulder straps and/or said sleeves (2) in said position of rest.

6. Seat (1) according to claim 5, **characterised in that** said spacing means (3) comprise complementary magnetic elements and/or Velcro^{®} elements and/or press stubs, which tend to connect with one another, at least one first magnetic element (31) and/or first Velcro^{®} element and/or first press stub being placed in said shoulder straps and/or said sleeve (2) and cooperating with at least one second complementary magnetic element (32) and/or second Velcro^{®} element and/or second press stub located in said lower surface (134) of the corresponding side portion (132) of the headrest (13).

7. Seat (1) according to claim 6, **characterised in that** said shoulder straps and/or said sleeves (2) carry a flexible plate (33) extending at least partly along said shoulder straps and/or said sleeves (2).

8. Seat (1) according to claim 3, **characterised in that** said spacing means (3) comprise a bistable plate (35) extending at least partly along said shoulder straps and/or said sleeves (2), which can adopt two positions, corresponding respectively to the position of use and the position of rest of the shoulder straps and/or the sleeves.

9. Seat (1) according to claim 3, **characterised in that** said spacing means (3) comprise a moulded plate (36) made of plastic material extending at least partly along said shoulder straps and/or said sleeves (2), said plate being articulated about a spring-loaded pin (37) configured to exert a restoring force on said shoulder straps and/or said sleeves (2) tending to move said shoulder straps and/or said sleeves against said headrest.

10. Seat (1) according to claim 9, **characterised in that** said spring-loaded pin (37) comprises a mechanism for locking said pin in at least said position of rest of said shoulder straps and/or said sleeves (2).

11. Seat (1) according to claim 1, **characterised in that** said headrest (13) is height-adjustable.

12. Seat (1) according to claim 10, **characterised in that** said shoulder straps are displaced in height simultaneously with said headrest (13).

13. Seat (1) according to claim 1, **characterised in that** it comprises a retractor (15) configured to tighten the harness (14), acting on said shoulder straps.

14. Seat (1) according to any of claims 1 to 13, **characterised in that** said seat is adapted to be fixed into a vehicle,
said seat can be fixed to a motor vehicle seat by means of Isofix^{®} clamps or via a base (16) fixed to the seat of a motor vehicle seat.

15. Seat (1) according to any of claims 1 to 13, **characterised in that** said seat belongs to the group comprising:
- a pushchair seat,
- a high chair,
- a bouncer.
